# EUROPÄISCHE PATENTSCHRIFT

(11) **EP 1 763 949 B1**
(45) Veröffentlichungstag und Bekanntmachung des Hinweises auf die Patenterteilung: **07.11.2007**
(21) Anmeldenummer: 05771969.2
(22) Anmeldetag: 06.07.2005
(51) Int. Cl.: H04M 3/533, H04M 1/65

(54) **VERFAHREN ZUM FERNABFRAGEN VON IN EINER TELEKOMMUNIKATIONSEINRICHTUNG GESPEICHERTEN INFORMATIONEN UND TELEKOMMUNIKATIONSEINRICHTUNG MIT FERNABFRAGEFUNKTIONALITÄT VON GESPEICHERTEN INFORMATIONEN**
METHOD FOR REMOTE INQUIRY OF INFORMATION STORED IN A TELECOMMUNICATIONS DEVICE AND A TELECOMMUNICATIONS DEVICE PROVIDED WITH A FUNCTION FOR STORED INFORMATION REMOTE INQUIRY
PROCEDE D'INTERROGATIONS A DISTANCE D'INFORMATIONS MEMORISEES DANS UN DISPOSITIF DE TELECOMMUNICATION, ET DISPOSITIF DE TELECOMMUNICATION A FONCTIONNALITE D'INTERROGATIONS A DISTANCE D'INFORMATIONS MEMORISEES

(30) Priorität: 06.07.2004 DE 102004032699
(43) Veröffentlichungstag der Anmeldung: 21.03.2007
(73) Patentinhaber: Siemens Home and Office Communication Devices GmbH & Co. KG, 81541 München (DE)
(72) Erfinder: JEJINA, Igor, 81479 München (DE)
(74) Vertreter: Berg, Peter
(86) Internationale Anmeldenummer: PCT/EP2005/053229
(87) Internationale Veröffentlichungsnummer: WO 2006/003211

(56) Entgegenhaltungen:
- EP-A- 0 831 630
- DE-A1- 10 235 798
- GB-A- 2 342 536

## Beschreibung

Die Erfindung bezieht sich auf ein Verfahren zum Fernabfragen von in einer Telekommunikationseinrichtung gespeicherten Informationen gemäß dem Oberbegriff des Patentanspruches 1 und eine Telekommunikationseinrichtung mit Fernabfragefunktionalität von gespeicherten Informationen gemäß dem Oberbegriff des Patentanspruches 12.

Telekommunikationseinrichtungen, in denen Informationen - z.B. Nachrichten eines Anrufers aus dem Fest- oder Mobilfunknetz, so genannte Anrufernachrichten - gespeichert bzw. speicherbar sind und die in der Regel eine Fernabfragefunktionalität zur Abfrage der gespeicherten Informationen bzw. Nachrichten von einem fernen Telekommunikationsgerät aufweisen, sind beispielsweise entweder beim Benutzer separat oder in Verbindung mit einem Telefon genutzte Anrufbeantworter oder beim Netzbetreiber gemietete T-Net-Boxen oder Voice Mail-Mobilboxen.

In früheren, dem analogen Festnetz zugeordneten Anrufbeantwortern sind zur Realisierung der Fernabfragefunktionalität gemäß der WO 95/05046 zu diesem Zweck speziell ausgebildete Handsender verwendet worden.

Mit dem zunehmenden Aufbau von Mobilfunknetzen und damit der Verbreitung von Mobilfunktelefonen, den so genannten Handy's, einerseits und der Einführung von am Festnetz betriebenen schnurlosen Telefonen andererseits zeichneten sich jedoch bezüglich der Fernabfrage von gespeicherten Informationen bzw. Nachrichten zwei Entwicklungen zu einem modifizierten Fernabfrageszenario ab. Zum einen, insbesondere im Mobilfunkbereich, die Nutzung von beim Netzbetreiber verwalteten und vom Benutzer anmietbaren Informations- bzw. Nachrichtenspeichern, den so genannten Boxen (T-Net-Box im Festnetz und Voice Mail-Mobilbox im Mobilfunknetz) und zum anderen die Tendenz: Weg von den Handsendern, um in einer der genannten Telekommunikationseinrichtungen gespeicherte Information bzw. Nachrichten fern abzufragen.

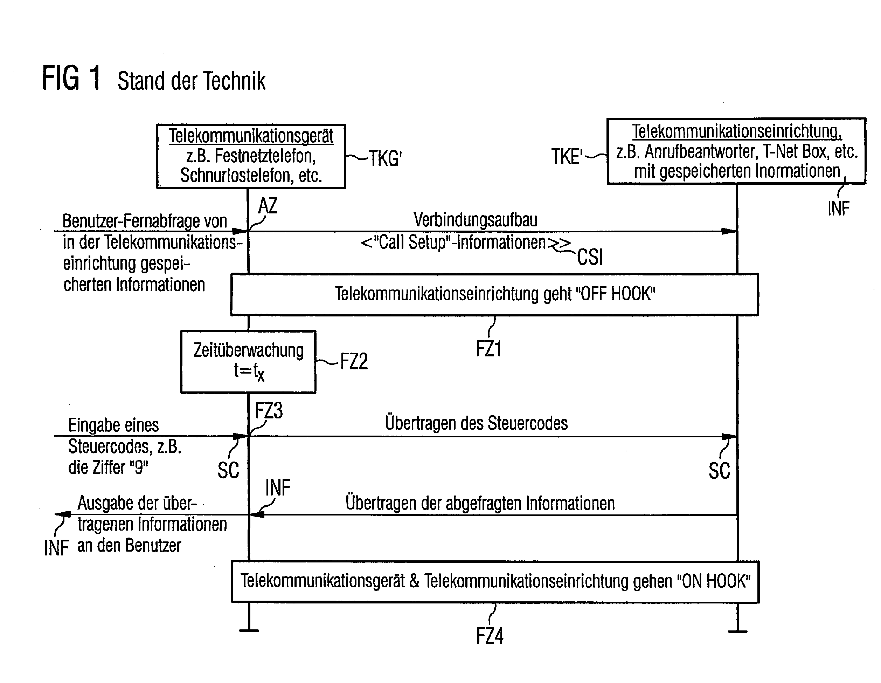

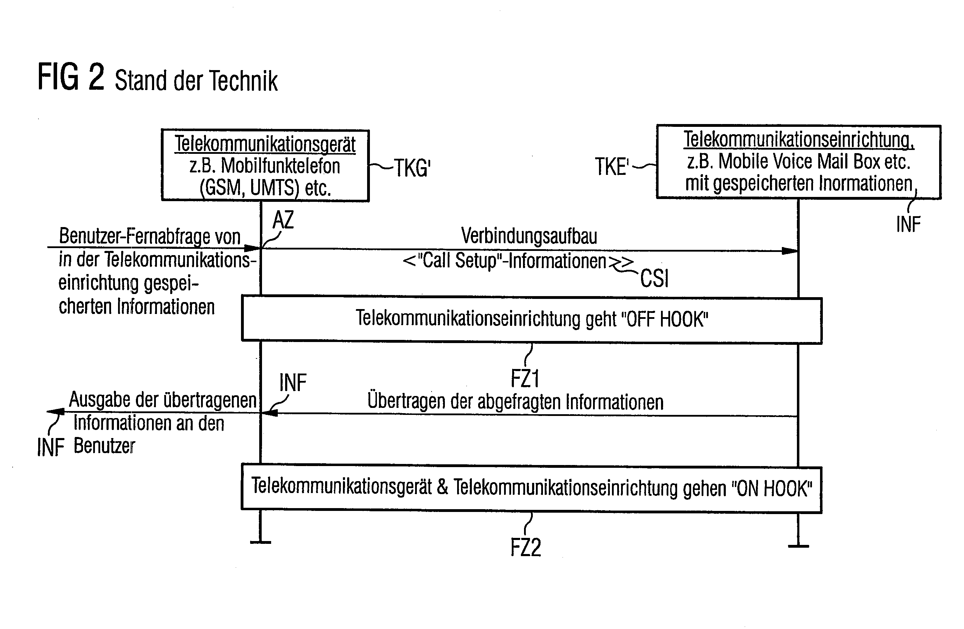

Wie dieses modifizierte, ebenfalls dem Stand der Technik zuzurechnende Fernabfrageszenario einerseits in Bezug auf das Festnetz und andererseits in Bezug auf das Mobilfunknetz aussieht bzw. wie die Informationen/Nachrichten prinzipiell fern abgefragt werden können, ist in den FIGUREN 1 und 2 anhand von Meldungsflussdiagrammen exemplarisch dargestellt. Es zeigen:
FIGUR 1 in Bezug auf das Festnetz das Fernabfragen von in einer Telekommunikationseinrichtung gespeicherten Informationen durch den Benutzer eines Telekommunikationsgerätes,
FIGUR 2 in Bezug auf das Mobilfunknetz das Fernabfragen von in einer Telekommunikationseinrichtung gespeicherten Informationen durch den Benutzer eines Telekommunikationsgerätes.

FIGUR 1 zeigt den Ablauf einer festnetzbasierten Fernabfrage von in einer vorzugsweise als Anrufbeantworter oder T-Net Box ausgebildeten Telekommunikationseinrichtung TKE' gespeicherten Informationen durch den Benutzer eines Telekommunikationsgeräte TKG', das z.B. als Festnetztelefon oder Schnurlostelefon ausgebildet sein kann, gemäß dem Stand der Technik. In einem Ausgangszustand AZ wird von dem Benutzer des Telekommunikationsgerätes TKG' als Abfragenden die Fernabfrage von in der Telekommunikationseinrichtung TKE' gespeicherten Informationen INF in dem Telekommunikationsgerät TKG' gestartet. Hierzu geht das Telekommunikationsgerät TKG' "OFF HOOK". Die in der Telekommunikationseinrichtung TKE' gespeicherten Informationen INF sind z.B. eine Nachricht eines Anrufers, der vergeblich versucht hat, den zu der Telekommunikationseinrichtung TKE' korrespondierenden Festnetzteilnehmer zu erreichen. Außerdem können die Informationen INF ganz allgemein jegliche Art von Text-, Audio- und/oder Videoinformationen enthalten.

Infolge des Starts der Benutzer-Fernabfrage, also im "OFF HOOK"-Zustand des Telekommunikationsgerätes TKG' baut das Telekommunikationsgerät TKG' eine Verbindung zu der Telekommunikationseinrichtung TKE' auf und überträgt dabei "Call Setup"-Informationen CSI an die Telekommunikationseinrichtung TKE'. Durch das Übertragen der "Call Setup"-Informationen CSI geht die Telekommunikationseinrichtung TKE' in einem ersten Folgezustand FZ1 ebenfalls "OFF HOOK", wodurch das Telekommunikationsgerät TKG' und die Telekommunikationseinrichtung TKE' miteinander verbunden sind.

Danach wird von dem Telekommunikationsgerät TKG' in einem zweiten Folgezustand FZ2 eine Zeit t=tₓ überwacht. In dieser Zeit t=tₓ besteht für den Benutzer des Telekommunikationsgerätes TKG' die Möglichkeit, die zu der Telekommunikationseinrichtung TKE' aufgebaute Verbindung zu nutzen. Wird innerhalb dieser Zeit t=tₓ von dem Benutzer des Telekommunikationsgerätes TKG' die aufgebaute Verbindung nicht genutzt, so kommt es zu einem Abbau der Verbindung zu der Telekommunikationseinrichtung TKE'.

In einem dritten Folgezustand FZ3, also innerhalb der überwachten Zeit t=tₓ, wird von dem Benutzer des Telekommunikationsgerätes TKG' zur Fernabfrage ein Steuercode SC eingegeben. Dieser Steuercode SC ist bei den bekannten Siemens-Schnurlostelefonen der Marke "GIGASET" die Ziffer "9", die über die Telefontastatur eingegeben wird. Nach der Eingabe des Steuercodes SC wird dieser von dem Telekommunikationsgerät TKG' - über die aufgebaute Verbindung an die Telekommunikationseinrichtung TKE' übertragen. Mit dem Übertragen des Steuercodes SC wird die Abfrage der in der Telekommunikationseinrichtung TKE' gespeicherten Informationen INF gesteuert.

Nachdem die Telekommunikationseinrichtung TKE' den Steuercode SC empfangen und überprüft hat, überträgt die Telekommunikationseinrichtung TKE' die abgefragten Informationen INF über die aufgebaute Verbindung an das Telekommunikationsgerät TKG'. In dem Telekommunikationsgerät TKG' werden die übertragenen Informationen INF für den Benutzer ausgegeben. Die Ausgabe der Informationen INF kann dabei akustisch und/oder visuell erfolgen. Die Ausgabe wird sich jedoch vorzugsweise danach richten, in welcher Form die gespeicherten Informationen INF in der Telekommunikationseinrichtung TKE' vorliegen. Sollten z.B. die gespeicherten Informationen INF eine Anrufernachricht sein, so wird diese durch Abspielen akustisch ausgegeben.

Nachdem die Informationen INF an den Benutzer ausgegeben worden sind, gehen sowohl das Telekommunikationsgerät TKG' als auch die Telekommunikationseinrichtung TKE' in einem vierten Folgezustand FZ4 "ON HOOK", wodurch die zwischen dem Telekommunikationsgerät TKG' und der Telekommunikationseinrichtung TKE' bestehende Verbindung wieder abgebaut wird.

FIGUR 2 zeigt den Ablauf einer mobilfunknetzbasierten Fernabfrage von in einer vorzugsweise als Mobile Voice Mail Box ausgebildeten Telekommunikationseinrichtung TKE' gespeicherten Informationen durch den Benutzer eines Telekommunikationsgeräte TKG', das z.B. als Mobilfunktelefon nach dem GSM- oder UMTS-Standard ausgebildet sein kann, gemäß dem Stand der Technik. In einem Ausgangszustand AZ wird von dem Benutzer des Telekommunikationsgerätes TKG' als Abfragenden die Fernabfrage von in der Telekommunikationseinrichtung TKE' gespeicherten Informationen INF in dem Telekommunikationsgerät TKG' gestartet. Hierzu geht das Telekommunikationsgerät TKG' "OFF HOOK". Die in der Telekommunikationseinrichtung TKE' gespeicherten Informationen INF sind z.B. eine Nachricht eines Anrufers, der vergeblich versucht hat, den zu der Telekommunikationseinrichtung TKE' korrespondierenden Mobilfunknetzteilnehmer zu erreichen. Außerdem können die Informationen INF ganz allgemein jegliche Art von Text-, Audio- und/oder Videoinformationen enthalten.

Infolge des Starts der Benutzer-Fernabfrage, also im "OFF HOOK"-Zustand des Telekommunikationsgerätes TKG' baut das Telekommunikationsgerät TKG' eine Verbindung zu der Telekommunikationseinrichtung TKE' auf und überträgt dabei "Call Setup"-Informationen CSI an die Telekommunikationseinrichtung TKE'. Durch das Übertragen der "Call Setup"-Informationen CSI geht die Telekommunikationseinrichtung TKE' in einem ersten Folgezustand FZ1 ebenfalls "Off Hook", wodurch das Telekommunikationsgerät TKG' und die Telekommunikationseinrichtung TKE' miteinander verbunden sind.

Danach überträgt die Telekommunikationseinrichtung TKE' die abgefragten Informationen INF über die aufgebaute Verbindung an das Telekommunikationsgerät TKG'. In dem Telekommunikationsgerät TKG' werden die übertragenen Informationen INF für den Benutzer ausgegeben. Die Ausgabe der Informationen INF kann dabei akustisch und/oder visuell erfolgen. Die Ausgabe wird sich jedoch vorzugsweise danach richten, in welcher Form die gespeicherten Informationen INF in der Telekommunikationseinrichtung TKE' vorliegen. Sollten z.B. die gespeicherten Informationen INF eine Anrufernachricht sein, so wird diese durch Abspielen akustisch ausgegeben.

Nachdem die Informationen INF an den Benutzer ausgegeben worden sind, gehen sowohl das Telekommunikationsgerät TKG' als auch die Telekommunikationseinrichtung TKE' in einem zweiten Folgezustand FZ2 "ON HOOK", wodurch die zwischen dem Telekommunikationsgerät TKG' und der Telekommunikationseinrichtung TKE' bestehende Verbindung wieder abgebaut wird.

Des weiteren sind bereits Techniken zur Einleitung eines Rückrufs mittels einer USSD-Nachricht bekannt.

GB-A-2 342 536 offenbart diesbezüglich die Fernabfrage einer Voice Mail-Mobilbox bei der eine Initialisierungsnachricht, die als USSD-Nachricht ausgebildet ist, gesendet wird und die Voice Mail-Mobilbox daraufhin eine Telekommunikationsverbindung zu dem Telekommunikationsgerät des Fernabfragenden aufgebaut wird.

DE 102 35 798 offenbart diesbezüglich ein Verfahren zum Verbinden von R-Gesprächen mittels USSD-Meldungen bei dem der Rückrufende mit den Kosten des Rückrufs belastet wird. Rückruf-Wünsche von speziellen Rufnummern können dabei mittels einer Schwarzen Liste verhindert werden.

Die der Erfindung zugrunde liegende Aufgabe besteht darin, das Fernabfragen von in einer Telekommunikationseinrichtung gespeicherten Informationen aus der Sicht des Abfragenden zu vereinfachen, den Bedienkomfort bei der Fernabfrage zu verbessern und die Kosten für die Fernabfrage bei Bedarf senken zu können.

Diese Aufgabe wird ausgehend von dem im Oberbegriff des Patentanspruches 1 definierten Verfahren durch die im Kennzeichen des Patentanspruches 1 angegebenen Merkmale gelöst.

Außerdem wird die Aufgabe ausgehend von der im Oberbegriff des Patentanspruches 12 definierten Telekommunikationseinrichtung durch die im Kennzeichen des Patentanspruches 12 angegebenen Merkmale gelöst.

Die der Erfindung zugrunde liegende Idee besteht darin, dass einer Telekommunikationseinrichtung - z.B. einen Anrufbeantworter, einer T-Net-Box oder einer Voice Mail-Mobilbox, der zur Fernabfrage von in der Telekommunikationseinrichtung gespeicherten Informationen eine die Fernabfrage einleitende Initialisierungsnachricht, die vorzugsweise als Kurznachricht gemäß dem "Short Message Service", als Multimedianachricht gemäß dem "Multimedia Message Service" oder ganz gewöhnlich als Telefonnachricht ausgebildet ist, gesendet wird, eine zur Fernabfrage berechtigende Authentisierungskennung und eine als Übermittlungsadresse für die Übermittlung der gespeicherten Informationen dienende Einwahlinformation mitgeteilt wird und dass die Telekommunikationseinrichtung nach Überprüfung der Authentisierungskennung und Auswertung der Einwahlinformation eine Telekommunikationsverbindung zu einem zu der Einwahlinformation korrespondierenden Telekommunikationsgerät, das vorzugsweise als Festnetz-, Schnurlos- oder Mobilfunktelefon - ausgebildet ist, aufbaut und über diese Telekommunikationsverbindung dem Fernabfragenden die Informationen übermittelt.

Als Informationen können vorzugsweise sowohl. Text-, Audio- und/oder Videoinformationen, die z.B. zum. Zweck der Fernüberwachung von beliebigen elektrischen/elektronischen Geräten, die mit der Telekommunikationseinrichtung verbunden sind, stammen können, als auch Anrufernachrichten in der Telekommunikationseinrichtung gespeichert sein.

Insbesondere durch das Senden einer Kurznachricht bzw. Multimedianachricht an den Anrufbeantworter bzw. an die T-Net-Box oder an die Mailbox wird der Anrufbeantworter bzw. die T-Net-Box oder die Mailbox selbständig (automatisch) einen Rückruf einleiten. Die für den Rückruf notwendige Telefonnummer, also die Einwahlinformation ist entweder die Telefonnummer des - Kurz- oder Multimedianachrichtensenders, die in der betreffenden Nachricht automatisch enthalten ist (unmittelbare - Übermittlung der Einwahlinformation bzw. der Telefonnummer), oder eine von der Telefonnummer des Kurz- oder Multimedianachrichtensenders abweichende Nummer, die allerdings manuell einzugeben ist.

Alternativ ist es auch möglich, dass die Einwahlinformation bzw. die Telefonnummer des Senders als CLIP-Information (**C**alling **L**ine **I**dentification **P**resentation), also mittelbar, übermittelt wird.

Für die Sicherheit und zum Zweck der Authentisierung wird von dem Kurz- oder Multimedianachrichtensender die vorzugsweise als Geheimcode bzw. individueller Code ausgebildete Authentisierungskennung in die entsprechende Nachricht eingegeben bzw. eingefügt. Dieser Code weist vorzugsweise einen telekommunikationseinrichtungsspezifischen Codeanteil auf. Wird z.B. ein Schnurlostelefon mit integriertem Anrufbeantworter als Telekommunikationseinrichtung verwendet, so bietet es sich an, die System-PIN (Personal Identification Number)als telekommunikationseinrichtungsspezifischen Codeanteil zu nutzen. Wenn sowohl die Authentisierungskennung als auch die Einwahlinformation in der Initialisierungsnachricht übertragen werden, sollte sich der Geheimcode bzw. individuelle Code, der z.B. die System-PIN als telekommunikationseinrichtungsspezifischen Codeanteil enthält, von einer Telefonnummer eindeutig unterscheiden, weil ansonsten der Rückruf unter Umständen zu einem falschen Teilnehmer eingeleitet wird.

Um in einem solchen Fall, eines nicht richtig adressierten Rückrufs, nicht einem falschen Adressaten die Informationen zu übertragen, und/oder um für den Fall, dass das Telekommunikationsgerät, das die Authentisierungskennung und die Einwahlinformation automatisch in die Initialisierungsnachricht einfügt, nicht von dem berechtigten Benutzer zur Fernabfrage benutzt worden ist, ist es aus Sicherheitsgründen von Vorteil, wenn, bevor die gespeicherten, fern abgefragten Informationen von der Telekommunikationseinrichtung übermittelt werden, der telekommunikationseinrichtungsspezifischen Codeanteil von dem Telekommunikationsgerät über die aufgebaute Telekommunikationsverbindung zu übertragen ist.

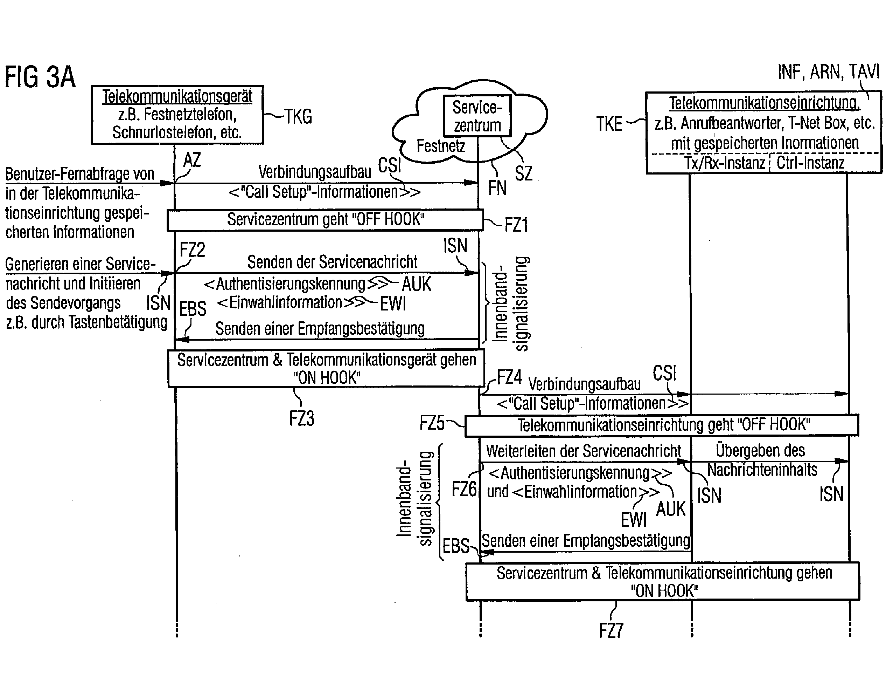

Die bisherigen bekannten Lösungen (vgl. FIGUREN 1 und 2) zur Fernabfrage von gespeicherten Informationen haben gegenüber der vorgeschlagenen erfindungsgemäßen Lösung (vgl. FIGUREN 3A, ,3B, 4A, 4B und 5) folgende Nachteile:
**(i)** Bei einem Anrufbeantworter als Telekommunikationseinrichtung muss sich der Abfragende den Steuercode für die Anrufbeantworteraktivierung merken.
**(ii)** Die Mailboxabfrage geht nur mit einem Mobilfunktelefon (Handy) mit entsprechender SIM-Karte.
**(iii)** Die Gebühren müssen immer vom Abfragenden getragen werden. Je nach Situation kann es jedoch deutlich günstiger sein, wenn die Gebühren am Standort des Anrufbeantworters auflaufen;

Beispielszenario: Der Abfragende befindet sich im Hotel im Ausland (momentaner Aufenthaltsort). Er sendet z.B. im Hotel eine "SM" (**S**hort **M**essage; Kurznachricht) vom seinem Mobilfunktelefon (Handy) mit seiner ihm für den Hotelaufenthalt zugewiesenen Hotelrufnummer an den Anrufbeantworter bzw. die Voice Mail-Mobilbox. Der Anrufbeantworters bzw. die Voice mail-Mobilbox baut gemäß der mitgeteilten Hotelrufnummer z.B. eine Telekommunikationsverbindung zu dem Festnetzanschluss des Hotels auf und überträgt über diese Verbindung die fern abgefragten Informationen. Anstelle eines teuren Mobilfunkanrufes aus dem Ausland bzw. eines Auslandsanrufes vom Hotel mit Hotelgebühren fallen durch die Erfindung nur Gebühren für den SMS-Dienst und für den Festnetzanschluss ins Ausland an. Insbesondere für Telefongesellschaften stellt die vorgeschlagene Lösung ein attraktives Szenario dar.

Da insbesondere heutige Festnetztelefone bereits die Möglichkeit der SMS-Benachrichtigung bei entgangenem Anruf bzw. bei neuen Nachrichten auf dem Anrufbeantworter offerieren, wird mit der Funktion "Abruf des Anrufbeantworters per SMS (**S**hort **M**essage **S**ervice)" das Leistungsspektrum dieser Telefone und ganz allgemein sämtlicher Telekommunikationseinrichtungen bzw. Telekommunikationsgeräte aus Benutzersicht sinnvoll erweitert.

Weitere vorteilhafte Weiterbildungen der Erfindung sind in den übrigen Unteransprüchen und in der Beschreibung eines Ausführungsbeispiels der Erfindung angegeben.

Das Ausführungsbeispiel der Erfindung wird ausgehend von den FIGUREN 1 und 2 anhand der FIGUREN 3A, 3B, 4A, 4B und 5 erläutert. Es zeigen:

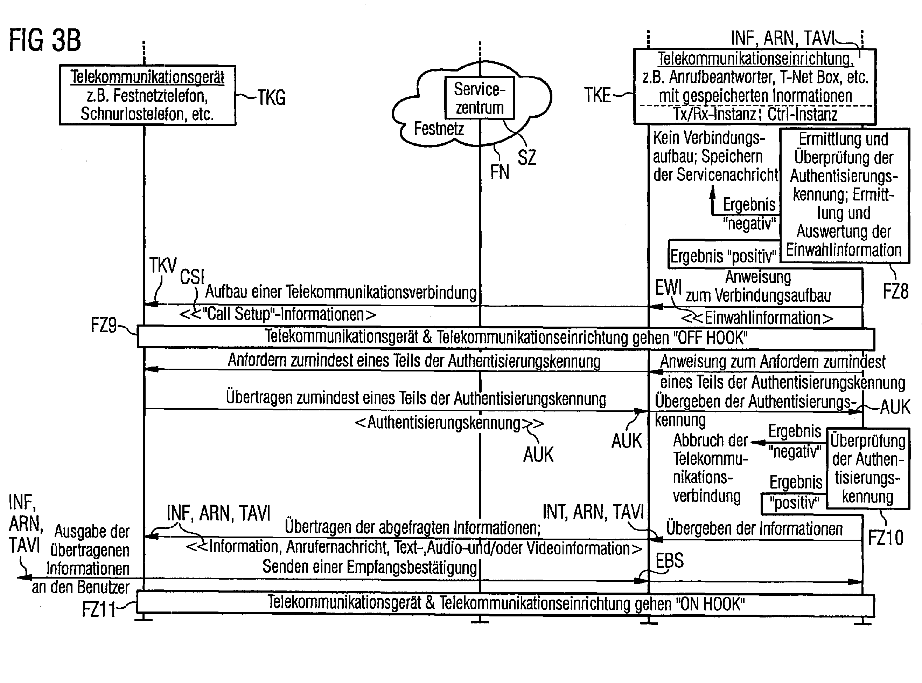

FIGUREN 3A und 3B in Bezug auf ein Festnetz das Fernabfragen von in einer Telekommunikationseinrichtung gespeicherten Informationen durch den Benutzer eines Telekommunikationsgerätes,

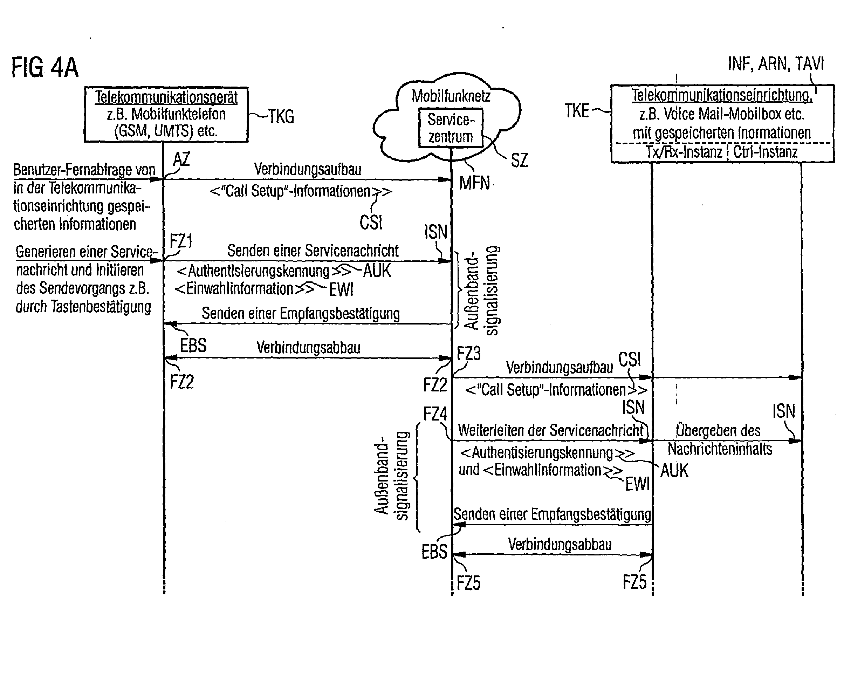

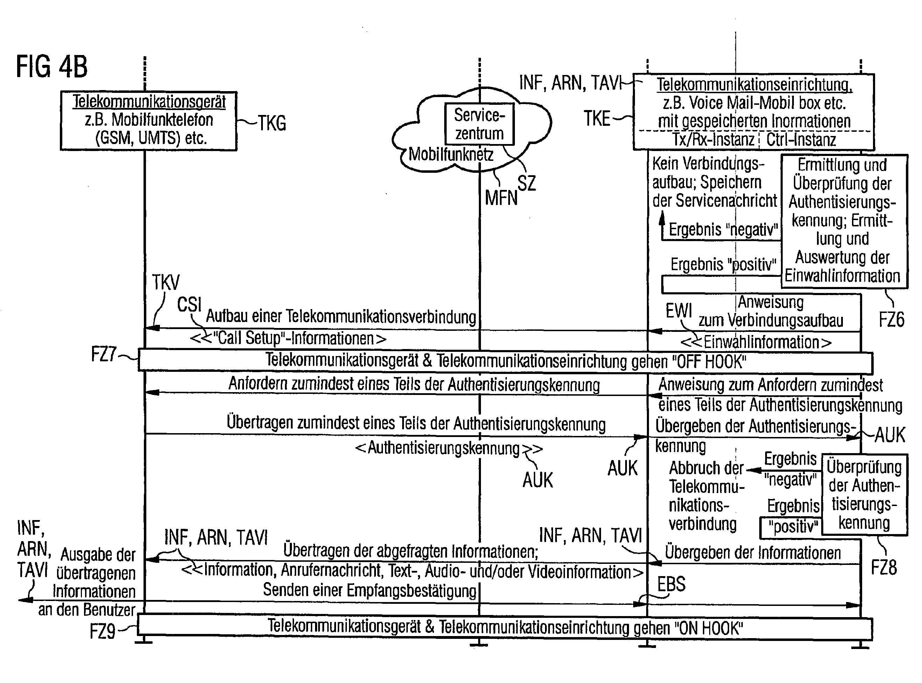

FIGUREN 4A und 4B in Bezug auf ein Mobilfunknetz das Fernabfragen von in einer Telekommunikationseinrichtung gespeicherten Informationen durch den Benutzer eines Telekommunikationsgerätes,

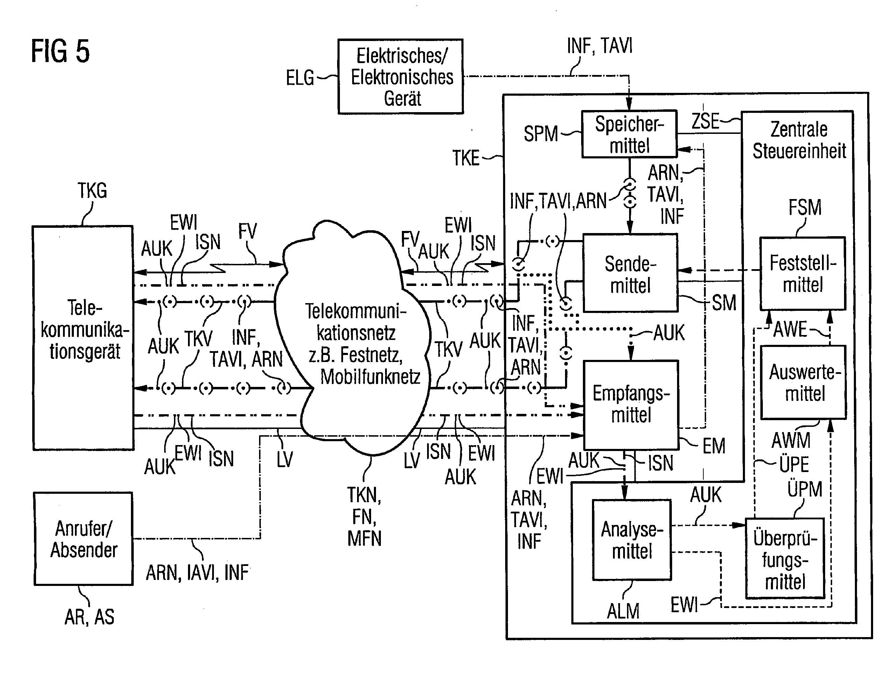

FIGUR 5 den Aufbau der Telekommunikationseinrichtung mit Fernabfragefunktionalität von gespeicherten Informationen,
wobei die Telekommunikationseinrichtung bei der Fernabfrage entweder entsprechend dem in den FIGUREN 3a und 3b oder entsprechend dem in den FIGUREN 4a und 4b dargestellten Ablauf eingebunden ist.

FIGUREN 3A und 3B zeigen ausgehend von der FIGUR 1 den modifizierten Ablauf einer festnetzbasierten Fernabfrage von in einer wieder vorzugsweise als Anrufbeantworter oder T-Net Box ausgebildeten Telekommunikationseinrichtung TKE gespeicherten Informationen durch den Benutzer eines Telekommunikationsgerätes TKG, das z.B. wieder als Festnetztelefon oder Schnurlostelefon ausgebildet sein kann. Die Telekommunikationseinrichtung TKE weist eine Tx/Rx-Instanz und eine Ctrl-Instanz auf, deren Funktion im Hinblick auf die Fernabfrage mit der weiteren Beschreibung des Fernabfrageablaufes und insbesondere mit der Beschreibung der FIGUR 5 erläutert wird.

In einem Ausgangszustand AZ wird von dem Benutzer des Telekommunikationsgerätes TKG als Abfragenden wieder die Fernabfrage von in der Telekommunikationseinrichtung TKE gespeicherten Informationen INF in dem Telekommunikationsgerät TKG gestartet. Hierzu geht das Telekommunikationsgerät TKG "OFF HOOK". Die in der Telekommunikationseinrichtung TKE gespeicherten Informationen INF sind wieder z.B. eine Nachricht ARN eines Anrufers, der vergeblich versucht hat, den zu der Telekommunikationseinrichtung TKE korrespondierenden Festnetzteilnehmer zu erreichen. Außerdem können die Informationen INF ganz allgemein wieder jegliche Art von Text-, Audio- und/oder Videoinformationen TAVI enthalten.

Infolge des Starts der Benutzer-Fernabfrage, also im "OFF HOOK"-Zustand des Telekommunikationsgerätes TKG baut das Telekommunikationsgerät TKG eine Verbindung zu einem Servicezentrum SZ, das einem Festnetz FN zugeordnet ist, auf und - überträgt dabei "Call Setup"-Informationen CSI an das Servicezentrum SZ. Durch das Übertragen der "Call Setup"-Informationen CSI geht das Servicezentrum SZ, in einem ersten Folgezustand FZ1 ebenfalls "OFF HOOK", wodurch das Telekommunikationsgerät TKG' und das Servicezentrum SZ miteinander verbunden sind.

Danach wird in einem zweiten Folgezustand FZ2 von dem Benutzer des Telekommunikationsgerätes TKG zur Initialisierung der Fernabfrage der in der Telekommunikationseinrichtung TKE gespeicherten Informationen INF, ARN, TAVI eine als Initialisierungsnachricht ausgebildete Servicenachricht ISN eingegeben. Diese Initialisierungsnachricht bzw. Servicenachricht ISN wird vorzugsweise über eine nicht dargestellte Tastatur des Telekommunikationsgerätes TKG eingegeben. Die Initialisierungsnachricht bzw. Servicenachricht ISN ist vorzugsweise eine Kurznachricht gemäß dem "Short Message Service (SMS)" oder eine Multimedianachricht gemäß dem "Multimedia Message Service (MMS) ".

Nach der Eingabe der Initialisierungsnachricht bzw. Servicenachricht ISN wird; z.B. initiiert durch eine Tastenbetätigung auf dem Telekommunikationsgerät TKG, die für die Telekommunikationseinrichtung TKE bestimmte Initialisierungsnachricht bzw. Servicenachricht ISN von dem Telekommunikationsgerät TKG in bekannter Weise über die aufgebaute Verbindung an das Servicezentrum SZ übertragen.

Mit der übertragenen Initialisierungsnachricht bzw. Servicenachricht ISN werden dem Servicezentrum SZ jedoch noch zusätzlich eine zur Fernabfrage berechtigende Authentisierungskennung AUK und eine als Übermittlungsadresse für die Übermittlung der gespeicherten Informationen INF, TAVI, ARN dienende Einwahlinformation EWI mitgeteilt. Als Antwort auf die übertragene Initialisierungsnachricht bzw. Servicenachricht ISN mit der Authentisierungskennung AUK und der Einwahlinformation EWI sendet das Servicezentrum SZ eine Empfangsbestätigung EBS. Die Initialisierungsnachricht bzw. Servicenachricht ISN mit der Authentisierungskennung AUK und der Einwahlinformation EWI sowie die Empfangsbestätigung EBS werden im Zuge einer Innenbandsignalisierung übertragen.

Die Authentisierungskennung AUK ist beispielsweise ein von einer Telefonnummer eindeutig unterscheidbarer individueller Code, der vorzugsweise einen telekommunikationseinrichtungsspezifischen Codeanteil enthält.

Die Einwahlinformation EWI dient wie gesagt als Übermittlungsadresse und kann vorzugsweise entweder, wenn sie in der Initialisierungsnachricht bzw. Servicenachricht ISN inhärent enthalten ist, unmittelbar mit der Initialisierungsnachricht bzw. Servicenachricht ISN oder als CLIP-Information mittelbar mit der Initialisierungsnachricht bzw. Servicenachricht ISN übermittelt werden.

Nach dieser Übertragung gehen sowohl das Telekommunikationsgerät TKG als auch das Servicezentrum SZ in einem dritten Folgezustand FZ3 "ON HOOK", wodurch die zwischen dem Telekommunikationsgerät TKG und dem Servicezentrum SZ bestehende Verbindung wieder abgebaut wird.

Um die von dem Telekommunikationsgerät TKG empfangene Initialisierungsnachricht bzw. Servicenachricht ISN mit der Authentisierungskennung AUK und der Einwahlinformation EWI an die Telekommunikationseinrichtung TKE weiterzuleiten geht das Servicezentrum in einem vierten Folgezustand FZ4 "OFF HOOK". In diesem "OFF HOOK"-Zustand baut das Servicezentrum SZ eine Verbindung zu der Telekommunikationseinrichtung TKE auf und überträgt dabei "Call Setup"-Informationen CSI an die Telekommunikationseinrichtung TKE. Durch das Übertragen der "Call Setup"-Informationen CSI geht die Telekommunikationseinrichtung TKE mit der Tx/Rx-Instanz und der Ctrl-Instanz in einem fünften Folgezustand FZ5 ebenfalls "OFF HOOK", wodurch das Servicezentrum SZ und die Telekommunikationseinrichtung TKE mit der Tx/Rx-Instanz und der Ctrl-Instanz miteinander verbunden sind.

Danach leitet das Servicezentrum SZ in einem sechsten Folgezustand FZ6 die Initialisierungsnachricht bzw. Servicenachricht ISN mit der Authentisierungskennung AUK und der Einwahlinformation EWI an die Tx/Rx-Instanz der Telekommunikationseinrichtung TKE, die den Inhalt der Initialisierungsnachricht bzw. Servicenachricht ISN an die Ctrl-Instanz der Telekommunikationseinrichtung TKE weitergibt. Als Antwort auf die übertragene Initialisierungsnachricht bzw. Servicenachricht ISN mit der Authentisierungskennung AUK und der Einwahlinformation EWI sendet die Telekommunikationseinrichtung TKE eine Empfangsbestätigung EBS an das Servicezentrum SZ. Das Weiterleiten der Initialisierungsnachricht bzw. Servicenachricht ISN mit der Authentisierungskennung AUK und der Einwahlinformation EWI sowie die Übertragung der Empfangsbestätigung EBS erfolgt erneut im Zuge einer Innenbandsignalisierung.

Nach dieser Weiterleitung bzw. Übertragung gehen sowohl das Servicezentrum SZ als auch die Telekommunikationseinrichtung TKE mit der Tx/Rx-Instanz und der Ctrl-Instanz in einem siebten Folgezustand FZ7 "ON HOOK", wodurch die zwischen dem Servicezentrum SZ und der Telekommunikationseinrichtung TKE mit der Tx/Rx-Instanz und der Ctrl-Instanz bestehende Verbindung wieder abgebaut wird.

Im Anschluss daran werden von der Ctrl-Instanz der Telekommunikationseinrichtung TKE in einem achten Folgezustand FZ8 die von dem Servicezentrum SZ mit der Initialisierungsnachricht bzw. Servicenachricht ISN übermittelte Authentisierungskennung AUK ermittelt und überprüft sowie die Einwahlinformation EWI ermittelt und ausgewertet.

Führt die Überprüfung bzw. Auswertung zu einem positiven Ergebnis -.d.h. z.B. die ermittelte Authentisierungskennung AUK ist richtig und/oder die ermittelt und ausgewertete Einwahlinformation EWI wird aufgrund einer defaultmäßigen oder benutzerspezifischen Vorgabe bzw. Einstellung akzeptiert, so weist die Ctrl-Instanz der Telekommunikationseinrichtung TKE die Tx/Rx-Instanz an, eine Verbindung zu dem zu der Einwahlinformation EWI korrespondierenden Telekommunikationsgerät TKG aufzubauen und übergibt der Tx/Rx-Instanz hierzu die Einwahlinformation EWI.

Führt hingegen die Überprüfung bzw. Auswertung zu einem negativen Ergebnis - d.h. z.B. die ermittelte Authentisierungskennung AUK ist falsch und/oder die ermittelt und ausgewertete Einwahlinformation EWI wird aufgrund einer defaultmäßigen oder benutzerspezifischen Vorgabe bzw. Einstellung nicht akzeptiert, so kommt es zu keinem Verbindungsaufbau und die betreffende Initialisierungsnachricht bzw. Servicenachricht ISN wird beispielsweise gespeichert.

Aufgrund der von Ctrl-Instanz an die Tx/Rx-Instanz der Telekommunikationseinrichtung TKE gegebenen Anweisung zum Verbindungsaufbau geht die Telekommunikationseinrichtung TKE "OFF HOOK". In diesem "OFF HOOK"-Zustand baut die Telekommunikationseinrichtung TKE eine Telekommunikationsverbindung TKV zu dem Telekommunikationsgerät TKG auf und überträgt dabei "Call Setup"-Informationen CSI an das Telekommunikationsgerät TKG. Durch das Übertragen der "Call Setup"-Informationen CSI geht auch das Telekommunikationsgerät TKG "OFF HOOK", so dass in einem neunten Folgezustand FZ9 die Telekommunikationseinrichtung TKE und das Telekommunikationsgerät TKG "OFF HOOK" und miteinander verbunden sind.

In diesem Zustand fordert die Tx/Rx-Instanz der Telekommunikationseinrichtung TKE, nachdem sie von der Ctrl-Instanz der Telekommunikationseinrichtung TKE angewiesen worden ist, zumindest einen Teil der Authentisierungskennung AUK, z.B. den telekommunikationseinrichtungsspezifischen Codeanteil, von dem Telekommunikationsgerät TKG anzufordern, diesen Teil der Authentisierungskennung AUK bei dem Telekommunikationsgerät TKG an. Im Gegenzug erhält die Tx/Rx-Instanz der Telekommunikationseinrichtung TKE von dem Telekommunikationsgerät TKG den angeforderten Teil der Authentisierungskennung AUK und übergibt die erhaltene Authentisierungskennung AUK an die Ctrl-Instanz der Telekommunikationseinrichtung TKE.

Im Anschluss daran werden von der Ctrl-Instanz der Telekommunikationseinrichtung TKE in einem zehnten Folgezustand FZ10 der von dem Telekommunikationsgerät TKG übermittelte Teil- oder die vollständig übermittelte Authentisierungskennung AUK überprüft.

Führt die Überprüfung zu einem positiven Ergebnis - d.h. z.B. die übermittelte Authentisierungskennung AUK ist richtig und stimmt z.B. mit einer in der Telekommunikationseinrichtung TKE gespeicherten Authentisierungskennung überein, so übergibt die Ctrl-Instanz der Telekommunikationseinrichtung TKE die angeforderten Informationen INF, ARN, TAVI an die Tx/Rx-Instanz, die ihrerseits die angeforderten Informationen INF, ARN, TAVI an das Telekommunikationsgerät TKG überträgt.

Führt hingegen die Überprüfung zu einem negativen Ergebnis - d.h. z.B. die übermittelte Authentisierungskennung AUK ist falsch und stimmt z.B. mit einer in der Telekommunikationseinrichtung TKE gespeicherten Authentisierungskennung nicht überein, so kommt es zu einem Abbruch der Telekommunikationsverbindung TKV.

Nach dem Empfang der angeforderten Informationen INF, ARN, TAVI durch das Telekommunikationsgerät TKG werden die übertragenen Informationen INF für den Benutzer ausgegeben und als Antwort auf die empfangenen Informationen INF, ARN, TAVI eine Empfangsbestätigung EBS an die Tx/Rx-Instanz und Ctrl-Instanz der Telekommunikationseinrichtung TKE gesendet.

Die Ausgabe der Informationen INF, ARN TAVI kann wieder akustisch und/oder visuell erfolgen. Die Ausgabe wird sich jedoch vorzugsweise danach richten, in welcher Form die gespeicherten Informationen INF, ARN, TAVI in der Telekommunikationseinrichtung TKE vorliegen. Sollten z.B. die gespeicherten Informationen INF, ARN, TAVI eine Anrufernachricht ARN oder ganz allgemein irgendwelche Audioinformationen sein, so werden diese durch Abspielen akustisch ausgegeben, während für den Fall, dass die Informationen INF, ARN, TAVI Text- oder Videoinformationen sein sollten, diese vorzugsweise durch Anzeige auf einem Display des Telekommunikationsgerätes TKG ausgegeben werden.

Nachdem die Informationen INF, ARN, TAVI an den Benutzer ausgegeben worden sind, gehen sowohl das Telekommunikationsgerät TKG als auch die Telekommunikationseinrichtung TKE in einem elften Folgezustand FZ11 "ON HOOK", wodurch die zwischen dem Telekommunikationsgerät TKG und der Telekommunikationseinrichtung TKE bestehende Telekommunikationsverbindung TKV wieder abgebaut wird.

FIGUREN 4A und 4B zeigen ausgehend von der FIGUR 2 den modifizierten Ablauf einer mobilfunknetzbasierten Fernabfrage von in einer wieder vorzugsweise als Mobile Voice Mail Box ausgebildeten Telekommunikationseinrichtung TKE gespeicherten Informationen durch den Benutzer eines Telekommunikationsgerätes TKG, das z.B. wieder das z.B. als Mobilfunktelefon nach dem GSM- oder UMTS-Standard ausgebildet sein kann. Die Telekommunikationseinrichtung TKE weist eine Tx/Rx-Instanz und eine Ctrl-Instanz auf, deren Funktion im Hinblick auf die Fernabfrage mit der weiteren Beschreibung des Fernabfrageablaufes und insbesondere mit der Beschreibung der FIGUR 5 erläutert wird.

In einem Ausgangszustand AZ wird von dem Benutzer des Telekommunikationsgerätes TKG als Abfragenden wieder die Fernabfrage von in der Telekommunikationseinrichtung TKE gespeicherten Informationen INF in dem Telekommunikationsgerät TKG gestartet. Die in der Telekommunikationseinrichtung TKE gespeicherten Informationen INF sind wieder z.B. eine Nachricht ARN eines Anrufers, der vergeblich versucht hat, den zu der Telekommunikationseinrichtung TKE korrespondierenden Mobilfunknetzteilnehmer zu erreichen. Außerdem können die Informationen INF ganz allgemein wieder jegliche Art von Text-, Audio- und/oder Videoinformationen TAVI enthalten.

Infolge des Starts der Benutzer-Fernabfrage baut das Telekommunikationsgerät TKG eine Verbindung zu einem Servicezentrum SZ, das einem Mobilfunknetz MFN zugeordnet ist, auf und überträgt dabei "Call Setup"-Informationen CSI an das Servicezentrum SZ.

Danach wird in einem ersten Folgezustand FZ1 von dem Benutzer des Telekommunikationsgerätes TKG zur Initialisierung der Fernabfrage der in der Telekommunikationseinrichtung TKE gespeicherten Informationen INF, ARN, TAVI eine als Initialisierungsnachricht ausgebildete Servicenachricht ISN eingegeben. Diese Initialisierungsnachricht bzw. Servicenachricht ISN wird vorzugsweise über eine nicht dargestellte Tastatur des Telekommunikationsgerätes TKG eingegeben. Die Initialisierungsnachricht bzw. Servicenachricht ISN ist vorzugsweise eine Kurznachricht gemäß dem "Short Message Service (SMS)" oder eine Multimedianachricht gemäß dem "Multimedia Message Service (MMS)".

Nach der Eingabe der Initialisierungsnachricht bzw. Servicenachricht ISN wird, z.B. initiiert durch eine Tastenbetätigung auf dem Telekommunikationsgerät TKG, die für die Telekommunikationseinrichtung TKE bestimmte Initialisierungsnachricht bzw. Servicenachricht ISN von dem Telekommunikationsgerät TKG in bekannter Weise über die aufgebaute Verbindung an das Servicezentrum SZ übertragen.

Mit der übertragenen Initialisierungsnachricht bzw. Servicenachricht ISN werden dem Servicezentrum SZ jedoch noch zusätzlich eine zur Fernabfrage berechtigende Authentisierungskennung AUK und eine als Übermittlungsadresse für die Übermittlung der gespeicherten Informationen INF, TAVI, ARN dienende Einwahlinformation EWI mitgeteilt. Als Antwort auf die übertragene Initialisierungsnachricht bzw. Servicenachricht ISN mit der Authentisierungskennung AUK und der Einwahlinformation EWI sendet das Servicezentrum SZ eine Empfangsbestätigung EBS. Die Initialisierungsnachricht bzw. Servicenachricht ISN mit der Authentisierungskennung AUK und der Einwahlinformation EWI sowie die Empfangsbestätigung EBS werden im Zuge einer Außenbandsignalisierung übertragen.

Die Authentisierungskennung AUK ist beispielsweise ein von einer Telefonnummer eindeutig unterscheidbarer individueller Code, der vorzugsweise einen telekommunikationseinrichtungsspezifischen Codeanteil enthält.

Die Einwahlinformation EWI dient wie gesagt als Übermittlungsadresse und kann vorzugsweise entweder, wenn sie in der Initialisierungsnachricht bzw. Servicenachricht ISN inhärent enthalten ist, unmittelbar mit der Initialisierungsnachricht bzw. Servicenachricht ISN oder als CLIP-Information mittelbar mit der Initialisierungsnachricht bzw. Servicenachricht ISN übermittelt werden.

Nach dieser Übertragung wird in einem zweiten Folgezustand FZ2 die zwischen dem Telekommunikationsgerät TKG und dem Servicezentrum SZ bestehende Verbindung wieder abgebaut.

Um die von dem Telekommunikationsgerät TKG empfangene Initialisierungsnachricht bzw. Servicenachricht ISN mit der Authentisierungskennung AUK und der Einwahlinformation EWI an die Telekommunikationseinrichtung TKE weiterzuleiten baut das Servicezentrum in einem dritten Folgezustand FZ3 eine Verbindung zu der Telekommunikationseinrichtung TKE auf und überträgt dabei "Call Setup"-Informationen CSI an die Telekommunikationseinrichtung TKE mit der Tx/Rx-Instanz und der Ctrl-Instanz

Danach leitet das Servicezentrum SZ in einem vierten Folgezustand FZ4 die Initialisierungsnachricht bzw. Servicenachricht ISN mit der Authentisierungskennung AUK und der Einwahlinformation EWI an die Tx/Rx-Instanz der Telekommunikationseinrichtung TKE, die den Inhalt der Initialisierungsnachricht bzw. Servicenachricht ISN an die Ctrl-Instanz der Telekommunikationseinrichtung TKE weitergibt. Als Antwort auf die - übertragene Initialisierungsnachricht bzw. Servicenachricht ISN mit der Authentisierungskennung AUK und der Einwahlinformation EWI sendet die Telekommunikationseinrichtung TKE eine Empfangsbestätigung EBS an das Servicezentrum SZ. Das Weiterleiten der Initialisierungsnachricht bzw. Servicenachricht ISN mit der Authentisierungskennung AUK und der Einwahlinformation EWI sowie die Übertragung der Empfangsbestätigung EBS erfolgt erneut im Zuge einer Außenbandsignalisierung.

Nach dieser Weiterleitung bzw. Übertragung wird in einem fünften Folgezustand FZ5 die zwischen dem Servicezentrum SZ und der Telekommunikationseinrichtung TKE mit der Tx/Rx-Instanz und der Ctrl-Instanz bestehende Verbindung wieder abgebaut.

Im Anschluss daran werden von der Ctrl-Instanz der Telekommunikationseinrichtung TKE in einem sechsten Folgezustand FZ6 die von dem Servicezentrum SZ mit der Initialisierungsnachricht bzw. Servicenachricht ISN übermittelte Authentisierungskennung AUK ermittelt und überprüft sowie die Einwahlinformation EWI ermittelt und ausgewertet.

Führt die Überprüfung bzw. Auswertung zu einem positiven Ergebnis - d.h. z.B. die ermittelte Authentisierungskennung AUK ist richtig und/oder die ermittelt und ausgewertete Einwahlinformation EWI wird aufgrund einer defaultmäßigen oder benutzerspezifischen Vorgabe bzw. Einstellung akzeptiert, so weist die Ctrl-Instanz der Telekommunikationseinrichtung TKE die Tx/Rx-Instanz an, eine Verbindung zu dem zu der Einwahlinformation EWI korrespondierenden Telekommunikationsgerät TKG aufzubauen und übergibt der Tx/Rx-Instanz hierzu die Einwahlinformation EWI.

Führt hingegen die Überprüfung bzw. Auswertung zu einem negativen Ergebnis - d.h. z.B. die ermittelte Authentisierungskennung AUK ist falsch und/oder die ermittelt und ausgewertete Einwahlinformation EWI wird aufgrund einer defaultmäßigen oder benutzerspezifischen Vorgabe bzw. Einstellung nicht akzeptiert, so kommt es zu keinem Verbindungsaufbau und die betreffende Initialisierungsnachricht bzw. Servicenachricht ISN wird beispielsweise gespeichert.

Aufgrund der von Ctrl-Instanz an die Tx/Rx-Instanz der Telekommunikationseinrichtung TKE gegebenen Anweisung zum Verbindungsaufbau geht die Telekommunikationseinrichtung TKE "OFF HOOK". In diesem "OFF HOOK"-Zustand baut die Telekommunikationseinrichtung TKE eine Telekommunikationsverbindung TKV zu dem Telekommunikationsgerät TKG auf und überträgt dabei "Call Setup"-Informationen CSI an das Telekommunikationsgerät TKG. Durch das Übertragen der "Call Setup"-Informationen CSI geht auch das Telekommunikationsgerät TKG "OFF HOOK", so dass in einem siebten Folgezustand FZ7 die Telekommunikationseinrichtung TKE und das Telekommunikationsgerät TKG "OFF HOOK" und miteinander verbunden sind.

In diesem Zustand fordert die Tx/Rx-Instanz der Telekommunikationseinrichtung TKE, nachdem sie von der Ctrl-Instanz der Telekommunikationseinrichtung TKE angewiesen worden ist, zumindest einen Teil der Authentisierungskennung AUK, z.B. den telekommunikationseinrichtungsspezifischen Codeanteil, von dem Telekommunikationsgerät TKG anzufordern, diesen Teil der Authentisierungskennung AUK bei dem Telekommunikationsgerät TKG an. Im Gegenzug erhält die Tx/Rx-Instanz der Telekommunikationseinrichtung TKE von dem Telekommunikationsgerät TKG den angeforderten Teil der Authentisierungskennung AUK und übergibt die erhaltene Authentisierungskennung AUK an die Ctrl-Instanz der Telekommunikationseinrichtung TKE.

Im Anschluss daran werden von der Ctrl-Instanz der Telekommunikationseinrichtung TKE in einem achten Folgezustand FZ8 der von dem Telekommunikationsgerät TKG übermittelte Teil oder die vollständig übermittelte Authentisierungskennung AUK - überprüft.

Führt die Überprüfung zu einem positiven Ergebnis - d.h. z.B. die übermittelte Authentisierungskepnung AUK ist richtig und stimmt z.B. mit einer in der Telekommunikationseinrichtung TKE gespeicherten Authentisierungskennung überein, so übergibt die Ctrl-Instanz der Telekommunikationseinrichtung TKE die angeforderten Informationen INF, ARN, TAVI an die Tx/Rx-Instanz, die ihrerseits die angeforderten Informationen INF, ARN, TAVI an das Telekommunikationsgerät TKG überträgt.

Führt hingegen die Überprüfung zu einem negativen Ergebnis - d.h. z.B. die übermittelte Authentisierungskennung AUK ist falsch und stimmt z.B. mit einer in der Telekommunikationseinrichtung TKE gespeicherten Authentisierungskennung nicht überein, so kommt es zu einem Abbruch der Telekommunikationsverbindung TKV.

Nach dem Empfang der angeforderten Informationen INF, ARN, TAVI durch das Telekommunikationsgerät TKG werden die übertragenen Informationen INF für den Benutzer ausgegeben und als Antwort auf die empfangenen Informationen INF, ARN, TAVI eine Empfangsbestätigung EBS an die Tx/Rx-Instanz und Ctrl-Instanz der Telekommunikationseinrichtung TKE gesendet.

Die Ausgabe der Informationen INF, ARN TAVI kann wieder akustisch und/oder visuell erfolgen. Die Ausgabe wird sich jedoch vorzugsweise danach richten, in welcher Form die gespeicherten Informationen INF, ARN, TAVI in der Telekommunikationseinrichtung TKE vorliegen. Sollten z.B. die gespeicherten Informationen INF, ARN, TAVI eine Anrufernachricht ARN oder ganz allgemein irgendwelche Audioinformationen sein, so werden diese durch Abspielen akustisch ausgegeben, während für den Fall, dass die Informationen INF, ARN, TAVI Text- oder Videoinformationen sein sollten, diese vorzugsweise durch Anzeige auf einem Display des Telekommunikationsgerätes TKG ausgegeben werden.

Nachdem die Informationen INF, ARN, TAVI an den Benutzer ausgegeben worden sind, gehen sowohl das Telekommunikationsgerät TKG als auch die Telekommunikationseinrichtung TKE in einem neunten Folgezustand FZ9 "ON HOOK", wodurch die zwischen dem Telekommunikationsgerät TKG und der Telekommunikationseinrichtung TKE bestehende Telekommunikationsverbindung TKV wieder abgebaut wird.

FIGUR 5 zeigt den für die Fernabfrage von gespeicherten Informationen gemäß der FIGUREN 3a, 3b, 4a und 4b relevanten Aufbau der Telekommunikationseinrichtung TKE. Die Telekommunikationseinrichtung TKE enthält demzufolge eine Zentrale Steuereinheit ZSE, die mit Sendemitteln SM und Empfangsmitteln EM verbunden ist. Darüber hinaus sind der Zentrale Steuereinheit ZSE Speichermittel SPM zugeordnet, die z.B. außerhalb der Zentralen Steuereinheit ZSE angeordnet und mit dieser verbunden sind. Alternativ ist es aber auch möglich, dass die Speichermittel SPM Bestandteil der Zentralen Steuereinheit ZSE, also in dieser integriert sind. Neben den zugeordneten Speichermitteln SPM sind der Zentralen Steuereinheit ZSE noch Feststellmittel FSM, Auswertemittel AWM, Überprüfungsmittel ÜPM und Analysemittel ALM zugeordnet, die vorzugsweise allesamt integraler Bestandteil der Zentralen Steuereinheit ZSE sind.

Gemäß der Darstellung in der FIGUR 5 ist die Telekommunikationseinrichtung TKE in Übereinstimmung zu den Darstellungen in den FIGUREN 3a und 3b bzw. FIGUREN 4a und 4b über ein Telekommunikationsnetz TKN, das beispielsweise als Festnetz FN oder als Mobilfunknetz MFN ausgebildet sein kann, mit dem Telekommunikationsgerät TKG verbunden. In Bezug auf das als Festnetz ausgebildete Telekommunikationsnetz TKN existiert eine Leitungsverbindung LV zwischen der Telekommunikationseinrichtung TKE und dem Telekommunikationsgerät TKG, wohingegen in Bezug auf das als Mobilfunknetz ausgebildete Telekommunikationsnetz TKN eine Funkverbindung FV zwischen der Telekommunikationseinrichtung TKE und dem Telekommunikationsgerät TKG existiert.

Damit eine Fernabfrage von gespeicherten Informationen überhaupt möglich ist, müssen diese fern abfragbaren Informationen erst einmal in die Telekommunikationseinrichtung TKE gelangen. Stellvertretend für die Vielzahl von Möglichkeiten, wie solche Informationen in die Telekommunikationseinrichtung TKE gelangen können, sollen im Folgenden drei dieser Möglichkeiten vorgestellt werden.

Als erstes ist es möglich, dass die Telekommunikationseinrichtung TKE bzw. der zugehörige Telekommunikationsteilnehmer von einem Anrufer (externer Telekommunikationsteilnehmer) AR über das Telekommunikationsnetz TKN angerufen wird und dieser Anrufer, weil die angerufene Person den Anruf nicht entgegennimmt, eine Anrufernachricht ARN in der Telekommunikationseinrichtung TKE hinterlegt, die in den Speichermitteln SPM gespeichert wird.

Des Weiteren ist es möglich, dass die Telekommunikationseinrichtung TKE bzw. der zugehörige Telekommunikationsteilnehmer von einem Absender AS über das Telekommunikationsnetz TKN Servicenachrichten, z.B. eine SMS-Nachricht (Short Message Service) oder eine MMS-Nachricht (Multimedia Message Service), erhält, die als Text-, Audio- und/oder Videoinformationen TAVI in die Speichermittel SPM der Telekommunikationseinrichtung TKE abgelegt werden.

Darüber hinaus ist es möglich, dass der Telekommunikationseinrichtung TKE ein elektrisches/elektronisches Gerät ELG zugeordnet ist, das Daten über dessen Betriebszustand an die Telekommunikationseinrichtung TKE überträgt, wobei diese Daten ebenfalls als Text-, Audio- und/oder Videoinformationen TAVI in die Speichermittel SPM der Telekommunikationseinrichtung TKE abgelegt werden.

Der zu den genanten Möglichkeiten jeweils korrespondierende Speichervorgang ist in der FIGUR 5 durch strichpunktierte Pfeildarstellungen angedeutet.

Die FIFUR 5 zeigt außerdem wie die gemäß den Fernabfrageszenarien der FIGUREN 3a, 3b, 4a und 4b zwischen der Telekommunikationseinrichtung TKE und dem Telekommunikationsgerät TKG über die Telekommunikationsverbindung TKV übertragenen Informationen INF, EWI, TAVI, Kennungen AUK und Nachrichten ISN, ARN in der Telekommunikationseinrichtung TKE von der Zentralen Steuereinheit ZSE und den zugeordneten Mitteln SPM, SM, EM, FSM, AWM, ÜPM, ALM bearbeitet werden, wie die Zentrale Steuereinheit ZSE und die zugeordneten Mittel SPM, SM, EM, FSM, AWM, ÜPM, ALM diesbezüglich eine Funktionseinheit bildend zusammenwirken und wie die Zentrale Steuereinheit ZSE und die zugeordneten Mittel SPM, SM, EM, FSM, AWM, ÜPM, ALM die von dem Telekommunikationsgerät TKG angeforderten gespeicherten Informationen INF, ARN, TAVI in Abhängigkeit von einem Auswerteergebnis AWE und einem Überprüfungsergebnis ÜPE (vgl. Folgezustände FZ8 und FZ10 in der FIGUR 3b und die Folgezustände FZ6 und FZ8 in der FIGUR 4b) letztlich an das Telekommunikationsgerät TKG gesendet werden.

## Patentansprüche

1. Verfahren zum Fernabfragen von in einer Telekommunikationseinrichtung gespeicherten Informationen, bei dem
a) eine die Fernabfrage einleitende Initialisierungsnachricht (ISN) an die Telekommunikationseinrichtung (TKE) gesendet wird,
***dadurch gekennzeichnet, dass***
b) mit der übertragenen Initialisierungsnachricht (ISN) der Telekommunikationseinrichtung (TKE) eine zur Fernabfrage berechtigende Authentisierungskennung (AUK) und eine als Übermittlungsadresse für die Übermittlung der gespeicherten Informationen (INF, TAVI, ARN) dienende Einwahlinformation (EWI) mitgeteilt werden,
c) die mitgeteilte Authentisierungskennung (AUK) von der Telekommunikationseinrichtung (TKE) ermittelt und überprüft wird,
d) die mitgeteilte Einwahlinformation (EWI) von der Telekommunikationseinrichtung (TKE) ermittelt und ausgewertet wird,
e) bei einem positiven Überprüfungsergebnis (ÜPE) der Authentisierungskennung (AUK) und Auswerteergebnis (AWE) der Einwahlinformation (EWI) von der Telekommunikationseinrichtung (TKE) eine Telekommunikationsverbindung (TKV) zu einem zu der Einwahlinformation (EWI) korrespondierenden Telekommunikationsgerät (TKG) aufgebaut wird,
f) dem Fernabfragenden über diese Telekommunikationsverbindung (TKV) die Information (INF, TAVI, ARN) übermittelt wird.

2. Verfahren nach Anspruch 1, ***dadurch gekennzeichnet, dass*** eine Telefonnachricht als die Initialisierungsnachricht (ISN) benutzt wird.

3. Verfahren nach Anspruch 1, ***dadurch gekennzeichnet, dass*** eine Servicenachricht, insbesondere eine Kurznachricht oder eine Multimedianachricht, als die Initialisierungsnachricht (ISN) benutzt wird.

4. Verfahren nach einem der Ansprüche 1 bis 3, ***dadurch gekennzeichnet, dass***
ein von einer Telefonnummer eineindeutig unterscheidbarer individueller Code als die Authentisierungskennung (AUK) benutzt wird.

5. Verfahren nach Anspruch 4, ***dadurch gekennzeichnet, dass*** der individuelle Code einen telekommunikationseinrichtungsspezifischen Codeanteil enthält.

6. Verfahren nach einem der Ansprüche 1 bis 5, ***dadurch gekennzeichnet, dass***
die Einwahlinformation (EWI) unmittelbar mit der Initialisierungsnachricht (ISN) übermittelt wird, sofern diese in der Initialisierungsnachricht (ISN) inhärent enthalten ist.

7. Verfahren nach einem der Ansprüche 1 bis 5, ***dadurch gekennzeichnet, dass***
die Einwahlinformation (EWI) mittelbar als CLIP-Information mit der Initialisierungsnachricht (ISN) übermittelt wird.

8. Verfahren nach Anspruch 1 und 5, ***dadurch gekennzeichnet, dass***
der telekommunikationseinrichtungsspezifische Codeanteil von dem Telekommunikationsgerät () über die aufgebaute Telekommunikationsverbindung (TKV) übertragen werden muss, bevor die Information (INF, TAVI, ARN) von der Telekommunikationseinrichtung (TKE) übermittelt wird.

9. Verfahren nach einem der Ansprüche 1 bis 8, ***dadurch gekennzeichnet, dass***
eine Anrufernachricht (ARN) von einem Anrufer (AR) fernabgefragt wird.

10. Verfahren nach einem der Ansprüche 1 bis 8, ***dadurch gekennzeichnet, dass***
eine Text-, Audio- und/oder Videoinformation (TAVI) fernabgefragt wird.

11. Verfahren nach Anspruch 10, ***dadurch gekennzeichnet, dass*** die Text-, Audio- und/oder Videoinformation (TAVI) Daten über den Betriebszustand eines der Telekommunikationseinrichtung (TKE) zugeordneten elektrischen/elektronischen Gerätes (ELG) beinhalten.

12. Telekommunikationseinrichtung mit Fernabfragefunktionalität von gespeicherten Informationen, die
a) Sendemittel (SM), Empfangsmittel (EM) und eine Zentrale Steuereinheit (ZSE) zur Steuerung der Funktions- und Bedienungsabläufe in der Telekommunikationseinrichtung (TKE) aufweist, wobei
a1) die Sendemittel (SM) und Empfangsmittel (EM) mit der Zentralen Steuereinheit (ZSE) verbunden sind,
a2) die Empfangsmittel () und die Zentrale Steuereinheit (ZSE) derart ausgebildet sind, dass eine die Fernabfrage einleitende, an die Telekommunikationseinrichtung (TKE) gesendete Initialisierungsnachricht (ISN) empfangen wird,
***dadurch gekennzeichnet, dass***
b) Analysemittel (ALM) vorhanden sind, die der Zentralen Steuereinheit (ZSE) zugeordnet sind und wobei die Zentrale Steuereinheit (ZSE) mit den Analysemitteln (ALM) und die Empfangsmittel (EM) derart ausgebildet sind, dass die der Telekommunikationseinrichtung (TKE) übertragene Initialisierungsnachricht (ISN) bezüglich einer zur Fernabfrage berechtigenden Authentisierungskennung (AUK) und einer als Übermittlungsadresse für die Übermittlung der gespeicherten Informationen (INF, TAVI, ARN) dienenden Einwahlinformation (EWI) analysiert wird,
c) Überprüfungsmittel (ÜPM) vorhanden sind, die der Zentralen Steuereinheit (ZSE) zugeordnet sind und wobei die Zentrale Steuereinheit (ZSE) mit den Analysemitteln (ALM) und den Überprüfungsmitteln (ÜPM) derart ausgebildet ist, dass die durch die Analyse der Initialisierungsnachricht (ISN) ermittelte Authentisierungskennung (AUK) überprüft wird,
d) Auswertemittel (AWM) vorhanden sind, die der Zentralen Steuereinheit (ZSE) zugeordnet sind und wobei die Zentrale Steuereinheit (ZSE) mit den Analysemitteln (ALM) und den Auswertemitteln (AWM) derart ausgebildet ist, dass die durch die Analyse der Initialisierungsnachricht (ISN) ermittelte Einwahlinformation (EWI) ausgewertet wird,
e) Feststellmittel (FSM) vorhanden sind, die der Zentralen Steuereinheit (ZSE) zugeordnet sind und wobei die Zentrale Steuereinheit (ZSE) mit den Feststellmitteln (FSM), den Überprüfungsmitteln (ÜPM) und den Auswertemitteln (AWM) sowie die Sendemittel (SM) derart ausgebildet sind, dass bei einem positiven Überprüfungsergebnis (ÜPE) der Authentisierungskennung (AUK) und einem positiven Auswerteergebnis (AWE) der Einwahlinformation (EWI) eine Telekommunikationsverbindung (TKV) zu einem zu der Einwahlinformation (EWI) korrespondierenden Telekommunikationsgerät (TKG) aufgebaut wird,
f) Speichermittel (SPM) zum Speichern der Informationen (INF, TAVI, ARN) vorhanden sind, die der Zentralen Steuereinheit (ZSE) zugeordnet sind und wobei die Zentrale Steuereinheit (ZSE) mit den Speichermitteln (SPM) und die Sendemittel (SM) derart ausgebildet sind, dass dem Fernabfragenden über die aufgebaute Telekommunikationsverbindung (TKV) die Informationen (INF, TAVI, ARN) übermittelt werden.

13. Telekommunikationseinrichtung nach Anspruch 12, ***dadurch gekennzeichnet, dass***
die Initialisierungsnachricht (ISN) eine Telefonnachricht ist.

14. Telekommunikationseinrichtung nach Anspruch 12, ***dadurch gekennzeichnet, dass***
die Initialisierungsnachricht (ISN) eine Servicenachricht, insbesondere eine Kurznachricht oder eine Multimedianachricht, ist.

15. Telekommunikationseinrichtung nach einem der Ansprüche 12 bis 14, ***dadurch gekennzeichnet, dass***
die Authentisierungskennung (AUK) ein von einer Telefonnummer eineindeutig unterscheidbarer individueller Code ist.

16. Telekommunikationseinrichtung nach Anspruch 15, ***dadurch gekennzeichnet, dass***
der individuelle Code einen telekommunikationseinrichtungsspezifischen Codeanteil enthält.

17. Telekommunikationseinrichtung nach einem der Ansprüche 12 bis 16, ***dadurch gekennzeichnet, dass***
die Einwahlinformation (EWI) in der Initialisierungsnachricht (ISN) inhärent enthalten ist und unmittelbar mit der Initialisierungsnachricht (ISN) übermittelbar ist.

18. Telekommunikationseinrichtung nach einem der Ansprüche 12 bis 16, ***dadurch gekennzeichnet, dass***
die Einwahlinformation (EWI) mittelbar als CLIP-Information mit der Initialisierungsnachricht (ISN) übermittelbar ist.

19. Telekommunikationseinrichtung nach Anspruch 12 und 16, ***dadurch gekennzeichnet, dass***
die Zentrale Steuereinheit (ZSE) mit den Speichermitteln (SPM) und die Sendemittel (SM) derart ausgebildet sind, dass die Information (INF, TAVI, ARN) übermittelt wird, sobald der telekommunikationseinrichtungsspezifischen Codeanteil von dem Telekommunikationsgerät (TKG) über die aufgebaute Telekommunikationsverbindung (TKV) übertragen worden ist.

20. Telekommunikationseinrichtung nach einem der Ansprüche 12 bis 19, ***dadurch gekennzeichnet, dass***
die gespeicherten Informationen (INF, TAVI, ARN) eine Anrufernachricht (ARN) von einem Anrufer (AR) enthalten.

21. Telekommunikationseinrichtung nach einem der Ansprüche 12 bis 19, ***dadurch gekennzeichnet, dass***
die gespeicherten Informationen (INF, TAVI, ARN) eine Text-, Audio- und/oder Videoinformation (TAVI) enthalten.

22. Telekommunikationseinrichtung nach Anspruch 21, ***dadurch gekennzeichnet, dass***
die Text-, Audio- und/oder Videoinformation (TAVI) Daten sind, die Auskunft über den Betriebszustand eines der Telekommunikationseinrichtung (TKE) zugeordneten elektrischen/elektronischen Gerätes (ELG) geben.

## Claims

1. Method for the remote request of information which is stored in a telecommunication entity, in which
a) an initialization message (ISN) which initiates the remote request is sent the telecommunication entity (TKE),
***characterized in that***
b) the transmitted initialization message (ISN) notifies the telecommunication entity (TKE) of an authentication code (AUK) which authorizes the remote request and dial-in information (EWI) which is to be used as a transfer address for transferring the stored information (INF, TAVI, ARN),
c) the notified authentication code (AUK) is determined and checked by the telecommunication entity (TKE),
d) the notified dial-in information (EWI) is determined and evaluated by the telecommunication entity (TKE),
e) in the case of a positive check result (ÜPE) of the authentication code (AUK) and evaluation result (AWE) of the dial-in information (EWI) by the telecommunication entity (TKE), a telecommunication connection (TKV) is established to a telecommunication device (TKG) which corresponds to the dial-in information (EWI),
f) the information (INF, TAVI, ARN) is transferred to the remote requester via this telecommunication connection (TKV).

2. Method according to claim 1, ***characterized in that***
a telephone message is used as the initialization message (ISN) .

3. Method according to claim 1, ***characterized in that***
a service message, in particular a short message or a multimedia message, is used as the initialization message (ISN) .

4. Method according to one of claims 1 to 3, ***characterized in that***
an individual code which is clearly distinguishable from a telephone number is used as the authentication code (AUK).

5. Method according to claim 4, ***characterized in that***
the individual code includes a code part which is specific to a telecommunication entity.

6. Method according to one of claims 1 to 5, ***characterized in that***
the dial-in information (EWI) is transferred directly with the initialization message (ISN) if it is inherently included in the initialization message (ISN).

7. Method according to one of claims 1 to 5, ***characterized in that***
the dial-in information (EWI) is transferred indirectly as CLIP information with the initialization message (ISN).

8. Method according to one of claims 1 to 5, ***characterized in that***
the code part which is specific to a telecommunication entity must be transmitted from the telecommunication device () via the established telecommunication connection (TKV) before the information (INF, TAVI, ARN) is transferred by the telecommunication entity (TKE).

9. Method according to one of claims 1 to 8, ***characterized in that***
a caller message (ARN) from a caller (AR) is remotely requested.

10. Method according to one of claims 1 to 8, ***characterized in that***
a text, audio and/or video information (TAVI) is remotely requested.

11. Method according to claim 10, ***characterized in that***
the text, audio and/or video information (TAVI) contains data relating to the operating state of an electrical/electronic device (ELG) which is assigned to the telecommunication entity (TKE).

12. Telecommunication entity having remote request functionality for stored information, which
a) includes send means (SM), receive means (EM) and a central control unit (ZSE) for controlling the functional sequences and operating sequences in the telecommunication entity (TKE), wherein
a1) the send means (SM) and receive means (EM) are connected to the central control unit (ZSE),
a2) the receive means () and the central control unit (ZSE) are configured in such a way that an initialization message (ISN) which initiates the remote request is received at the telecommunication entity (TKE),
***characterized in that***
b) provision is made for analysis means (ALM) which are assigned to the central control unit (ZSE), wherein the central control unit (ZSE) including the analysis means (ALM) and the receive means (EM) are configured in such a way that the initialization message (ISN) which is transmitted to the telecommunication entity (TKE) is analyzed with reference to an authentication code (AUK) for authorizing the remote request and dial-in information (EWI) which serves as a transfer address for transferring the stored information (INF, TAVI, ARN),
c) provision is made for checking means (ÜPM) which are assigned to the central control unit (ZSE), wherein the central control unit (ZSE) including the analysis means (ALM) and the checking means (ÜPM) is configured in such a way that the authentication code (AUK), which is determined as a result of the analysis of the initialization message (ISN), is checked,
d) provision is made for evaluation means (AWM) which are assigned to the central control unit (ZSE), wherein the central control unit (ZSE) including the analysis means (ALM) and the evaluation means (AWM) is configured in such a way that the dial-in information (EWI), which is determined as a result of the analysis of the initialization message (ISN), is evaluated,
e) provision is made for detection means (FSM) which are assigned to the central control unit (ZSE), wherein the central control unit (ZSE) including the detection means (FSM), the checking means (ÜPM) and the evaluation means (AWM) and the send means (SM) are configured in such a way that, if a check result (ÜPE) of the authentication code (AUK) is positive and an evaluation result (AWE) of the dial-in information (EWI) is positive, a telecommunication connection (TKV) is established to a telecommunication device (TKG) which corresponds to the dial-in information (EWI),
f) provision is made for storage means (SPM) which are for storing the information (INF, TAVI, ARN) and are assigned to the central control unit (ZSE), wherein the central control unit (ZSE) including the storage means (SPM) and the send means (SM) are configured in such a way that the information (INF, TAVI, ARN) is transferred to the remote requestor via the established telecommunication connection (TKV).

13. Telecommunication entity according to claim 12,
***characterized in that***
the initialization message (ISN) is a telephone message.

14. Telecommunication entity according to claim 12,
***characterized in that***
the initialization message (ISN) is a service message, in particular a short message or a multimedia message.

15. Telecommunication entity according to one of claims 12 to 14, ***characterized in that***
the authentication code (AUK) is an individual code which is clearly distinguishable from a telephone number.

16. Telecommunication entity according to claim 15, ***characterized in that***
the individual code includes a code part which is specific to a telecommunication entity.

17. Telecommunication entity according to one of claims 12 to *16, **characterized in that***
the dial-in information (EWI) is inherently included in the initialization message (ISN) and can be transferred directly with the initialization message (ISN).

18. Telecommunication entity according to one of claims 12 to *16, **characterized in that***
the dial-in information (EWI) can be transferred indirectly as CLIP information with the initialization message (ISN).

19. Telecommunication entity according to one of claims 12 to *16, **characterized in that***
the central control unit (ZSE) including the storage means (SPM) and the send means (SM) are configured in such a way that the information (INF, TAVI, ARN) is transferred as soon as the code part which is specific to a telecommunication entity has been transmitted from the telecommunication device (TKG) via the established telecommunication connection (TKV).

20. Telecommunication entity according to one of claims 12 to *19, **characterized in that***
the stored information (INF, TAVI, ARN) contains a caller message (ARN) from a caller (AR).

21. Telecommunication entity according to one of claims 12 to *19, **characterized in that***
the stored information (INF, TAVI, ARN) contains text, audio and/or video information (TAVI).

22. Telecommunication entity according to claim 21, ***characterized in that***
the text, audio and/or video information (TAVI) is data which provides information relating to the operating state of an electrical/electronic device (ELG) which is assigned to the telecommunication entity (TKE).

## Revendications

1. Procédé pour interroger à distance des informations stockées dans un dispositif de télécommunications, dans lequel
a) un message d'initialisation (ISN) initialisant l'interrogation à distance est envoyé au dispositif de télécommunications (TKE),
**caractérisé en ce que**
b) sont communiqués, au dispositif de télécommunications (TKE), avec le message d'initialisation transmis (ISN), un identifiant d'authentification (AUK) autorisant à l'interrogation à distance et une information d'accès servant d'adresse de transmission pour la transmission des informations stockées (INF, TAVI, ARN),
c) l'identifiant d'authentification communiqué (AUK) est détecté et vérifié par le dispositif de télécommunications (TKE),
d) l'information d'accès communiquée (EWI) est détectée et évaluée par le dispositif de télécommunications (TKE),
e) étant donné un résultat positif de la vérification (ÜPE) de l'identifiant d'authentification (AUK) et un résultat positif de l'évaluation (AWE) de l'information d'accès (EWI), une liaison de télécommunications (TKV) est établie par le dispositif de télécommunications (TKE) vers un appareil de télécommunications (TKG) correspondant à l'information d'accès (EWI),
f) l'information (INF, TAVI, ARN) est transmise à l'interrogateur à distance via cette liaison de télécommunications (TKV).

2. Procédé selon la revendication 1, **caractérisé en ce qu'**est utilisé, en tant que message d'initialisation (ISN), un message téléphonique.

3. Procédé selon la revendication 1, **caractérisé en ce qu'**est utilisé, en tant que message d'initialisation (ISN), un message de service, en particulier un message court ou un message multimédia.

4. Procédé selon l'une des revendications 1 à 3, **caractérisé en ce qu'**est utilisé, en tant qu'identifiant d'authentification (AUK), un code individuel biunivoquement différentiable d'un numéro de téléphone.

5. Procédé selon la revendication 4, **caractérisé en ce que** le code individuel contient une partie de code spécifique au dispositif de télécommunications.

6. Procédé selon l'une des revendications 1 à 5, **caractérisé en ce que** l'information d'accès (EWI) est transmise directement avec le message d'initialisation (ISN) dans la mesure où celle-ci est contenue intrinsèquement dans le message d'initialisation (ISN).

7. Procédé selon l'une des revendications 1 à 5, **caractérisé en ce que** l'information d'accès (EWI) est transmise indirectement en tant qu'information CLIP avec le message d'initialisation (ISN).

8. Procédé selon l'une des revendications 1 à 5, **caractérisé en ce que** la partie de code spécifique au dispositif de télécommunications doit être transmise par l'appareil de télécommunications via la liaison de télécommunications établie (TKV) avant que l'information (INF, TAVI, ARN) ne soit transmise par le dispositif de télécommunications (TKE).

9. Procédé selon l'une des revendications 1 à 8, **caractérisé en ce qu'**un message d'appelant (ARN) est interrogé à distance par un appelant (AR).

10. Procédé selon l'une des revendications 1 à 8, **caractérisé en ce qu'**une information textuelle, audio et/ou vidéo (TAVI) est interrogée à distance.

11. Procédé selon la revendication 10, **caractérisé en ce que** l'information textuelle, audio et/ou vidéo (TAVI) contient des données sur l'état de service d'un appareil électrique / électronique (ELG) associé au dispositif de télécommunications (TKE).

12. Dispositif de télécommunications avec une fonctionnalité d'interrogation à distance d'informations stockées, lequel
a) comporte des moyens d'émission (SM), des moyens de réception (EM) et une unité de commande centrale (ZSE) pour commander les déroulements fonctionnels et de commande dans le dispositif de télécommunications (TKE),
a1) les moyens d'émission (SM) et les moyens de réception (EM) étant reliés à l'unité de commande centrale (ZSE),
a2) les moyens de réception et l'unité de commande centrale (ZSE) étant réalisés de manière telle qu'un message d'initialisation (ISN) initialisant l'interrogation à distance et envoyé au dispositif de télécommunications (TKE) est reçu,
**caractérisé par**
b) la présence de moyens d'analyse (ALM) qui sont affectés à l'unité de commande centrale (ZSE) et l'unité de commande centrale (ZSE), avec les moyens d'analyse (ALM), et les moyens de réception (EM) étant réalisés de manière telle que le message d'initialisation (ISN) transmis au dispositif de télécommunications (TKE) est analysé quant à un identifiant d'authentification (AUK) autorisant à l'interrogation à distance et une information d'accès (EWI) servant d'adresse de transmission pour la transmission des informations stockées (INF, TAVI, ARN),
c) la présence de moyens de vérification (ÜPM) qui sont affectés à l'unité de commande centrale (ZSE) et l'unité de commande centrale (ZSE), avec les moyens d'analyse (ALM) et les moyens de vérification (ÜPM), étant réalisée de manière telle que l'identifiant d'authentification détecté par l'analyse du message d'initialisation (ISN) est vérifié,
d) la présence de moyens d'évaluation (AWM) qui sont affectés à l'unité de commande centrale (ZSE) et l'unité de commande centrale (ZSE), avec les moyens d'analyse (ALM) et les moyens d'évaluation (AWM), étant réalisée de manière telle que l'information d'accès (EWI) détectée par l'analyse du message d'initialisation (ISN) est évaluée,
e) la présence de moyens de constatation (FSM) qui sont affectés à l'unité de commande centrale (ZSE) et l'unité de commande centrale (ZSE), avec les moyens de constatation (FSM), les moyens de vérification (ÜPM) et les moyens d'évaluation (AWM), ainsi que les moyens d'émission (SM) étant réalisés de manière telle que, étant donné un résultat positif de la vérification (ÜPE) de l'identifiant d'authentification (AUK) et un résultat positif de l'évaluation (AWE) de l'information d'accès (EWI), une liaison de télécommunications (TKV) est établie vers un appareil de télécommunications (TKG) correspondant à l'information d'accès (EWI),
f) la présence de moyens de mémoire (SPM) pour mettre en mémoire les informations (INF, TAVI, ARN), lesquels sont affectés à l'unité de commande centrale (ZSE), et l'unité de commande centrale (ZSE), avec les moyens de mémoire (SPM), et les moyens d'émission (SM) étant réalisés de manière telle que les informations (INF, TAVI, ARN) sont transmises à l'interrogateur à distance via la liaison de télécommunications établie (TKV).

13. Dispositif de télécommunications selon la revendication 12, **caractérisé en ce que** le message d'initialisation (ISN) est un message téléphonique.

14. Dispositif de télécommunications selon la revendication 12, **caractérisé en ce que** le message d'initialisation (ISN) est un message de service, en particulier un message court ou un message multimédia.

15. Dispositif de télécommunications selon l'une des revendications 12 à 14, **caractérisé en ce que** l'identifiant d'authentification (AUK) est un code individuel biunivoquement différentiable d'un numéro de téléphone.

16. Dispositif de télécommunications selon la revendication 15, **caractérisé en ce que** le code individuel contient une partie de code spécifique au dispositif de télécommunications.

17. Dispositif de télécommunications selon l'une des revendications 12 à 16, **caractérisé en ce que** l'information d'accès (EWI) est contenue intrinsèquement dans le message d'initialisation (ISN) et peut être transmise directement avec le message d'initialisation (ISN) .

18. Dispositif de télécommunications selon l'une des revendications 12 à 16, **caractérisé en ce que** l'information d'accès (EWI) peut être transmise indirectement en tant qu'information CLIP avec le message d'initialisation (ISN).

19. Dispositif de télécommunications selon l'une des revendications 12 à 16, **caractérisé en ce que** l'unité de commande centrale (ZSE), avec les moyens de mémoire (SPM), et les moyens d'émission (SM) sont réalisés de manière telle que l'information (INF, TAVI, ARN) est transmise dès que la partie de code spécifique au dispositif de télécommunications a été transmise par l'appareil de télécommunications (TKG) via la liaison de télécommunications établie (TKV).

20. Dispositif de télécommunications selon l'une des revendications 12 à 19, **caractérisé en ce que** les informations stockées (INF, TAVI, ARN) contiennent un message d'appelant (ARN) d'un appelant (AR).

21. Dispositif de télécommunications selon l'une des revendications 12 à 19, **caractérisé en ce que** les informations stockées (INF, TAVI, ARN) contiennent une information textuelle, audio et/ou vidéo (TAVI).

22. Dispositif de télécommunications selon la revendication 21, **caractérisé en ce que** l'information textuelle, audio et/ou vidéo (TAVI) sont des données qui fournissent des renseignements sur l'état de service d'un appareil électrique / électronique (ELG) associé au dispositif de télécommunications.
